# EUROPEAN PATENT SPECIFICATION

(11) **EP 2 792 507 B1**
(45) Date of publication and mention of the grant of the patent: **09.11.2016**
(21) Application number: 14173081.2
(22) Date of filing: 11.03.2010
(51) Int. Cl.: B60C 17/00, B60C 13/00, B60C 15/06

(54) **Run-flat tire**
Notlaufreifen
Pneu de roulage à plat

(30) Priority: 11.03.2009 JP 2009057990
(43) Date of publication of application: 22.10.2014
(62) Divisional of application: 10750892.1
(73) Proprietor: Bridgestone Corporation, Tokyo 104-8340 (JP)
(72) Inventor: Wakiyama, Tadashi, Kodaira-shi, Tokyo 187-8531 (JP)
(74) Representative: Oxley, Robin John George

(56) References cited:
- EP-A1- 0 507 184
- JP-A- H0 958 229
- JP-A- 2007 191 154
- US-A- 4 129 162

## Description

### TECHNICAL FIELD

The present invention relates to a run-flat tire that is arranged from a buttress portion to a sidewall portion and that includes a reinforcing rubber layer having a crescent sectional shape.

### BACKGROUND ART

Conventionally, in run-flat tires that allows a vehicle to travel a certain distance even when an inner pressure greatly decreases such as when a puncture of tire, there is widely used a structure imparting a sidewall portion of a tire with a reinforcing rubber layer having a crescent sectional shape along a tread width direction.

The reinforcing rubber layer enables restraint of a deformation of the sidewall portion even when the inner pressure greatly decreases and a vehicle to travel a certain distance. In the run-flat tire provided with such a reinforcing rubber layer, there is known a method of increasing the thickness of the reinforcing rubber layer in order to improve the durability during high-speed driving. However, in the run-flat tire in which the thickness of the reinforcing rubber layer is increased, the stiffness increases; however, a tire weight increases and thus the centrifugal force generated due to the rolling of the tire also increases. Therefore, a load on the tread increases and the durability of the tread decreases.

As a result, a run-flat tire including a side reinforcing layer arranged along the reinforcing rubber layer is widely used (e.g., Patent Document 1). In such a side reinforcing layer, there is included a configuration in which a reinforcing cord is wound along the circumferential direction of the tire from a bead portion to a buttress portion. In this way, it is possible to provide a run-flat tire capable of improving the durability without increasing the tire weight.

### RELATED ART DOCUMENT

### PATENT DOCUMENT

Patent Document 1: JP-A-2007-106398 (Pages 6 to 7, Figs. 1 and 4). Attention is also drawn to the disclosures of JP H09 58229 and EP 0507 184 A, both disclosing a run-flat tire according to the preamble of claim 1.

### SUMMARY OF INVENTION

However, the aforementioned conventional method, i.e., a method of improving the durability without increasing the tire weight by using the side reinforcing layer in the sidewall portion, has the following problems. That is, a longitudinal spring component during high-speed driving increases along with the improvement of a vehicle driving capability, and as a result, there is a demand for further improvement on a riding comfort of a tire.

Therefore, the present invention has been achieved in view of the circumstance, and an object thereof is to provide a run-flat tire with a further improved riding comfort without decreasing the durability during high-speed vehicle driving.

To solve the above problem, according to a first aspect of the present invention there is provided a run-flat tire as claimed in claim 1.

According to the run-flat tire, there is provided a side reinforcing layer arranged along a reinforcing rubber layer. Thus, when the inner pressure of the run-flat tire greatly decreases such as when a puncture of tire, it is possible to increase the stiffness of the sidewall portion, prevent the deflection of the sidewall portion, and secure the durability. The run-flat tire eliminates a need of increasing the thickness of the reinforcing rubber layer, and therefore it is possible to improve the durability without increasing the tire weight.

The run-flat tire includes a turned-back bead reinforcing layer that is configured by a bead reinforcing layer main portion and a turned-back portion, that is arranged along the bead portion, and that is turned back around the bead core from the inside to the outside in the tread width direction. Thus, when the inner pressure of the run-flat tire 1 greatly decreases, it is possible to reinforce the bead portion that tends to deform along the tread width direction.

That is, according to the run-flat tire, when the inner pressure of the run-flat tire greatly decreases, it is possible to reinforce the necessary location only by the side reinforcing layer and the turned-back bead reinforcing layer, and at the same time, the stiffness along the tire diameter direction D affecting the longitudinal spring component is not excessively increased. Thus, it is possible to effectively prevent the deformation along the tread width direction.

Therefore, according to the run-flat tire, it is possible to further improve the riding comfort without decreasing the durability during high-speed vehicle driving.

[CANCELLED]

[CANCELLED]

[CANCELLED]

It is noted that the tension (so-called tension strength) is measured using a test piece of each component based on JIS L 1017.

A preferable feature of the present invention is summarized as that a fibrous material of the organic fiber cord configuring the side reinforcing layer is rayon, and a fibrous material of the organic fiber cord configuring the turned-back bead reinforcing layer is aramid.

According to the characteristic of the present invention, it is possible to provide a run-flat tire with which the riding comfort is further improved without decreasing the durability during high-speed vehicle driving.

### BRIEF DESCRIPTION OF DRAWINGS

[Fig. 1] It is a partial exploded perspective view of a run-flat tire according to an embodiment of the present invention.
[Fig. 2] It is a cross-sectional view of the run-flat tire according to the embodiment of the present invention in a tread width direction and a tire diameter direction.

### MODES FOR CARRYING OUT THE EMBODIMENTS

Subsequently, an embodiment of a run-flat tire according to the present invention will be described with reference to drawings. Specifically, (1) Configuration of run-flat tire, (2) Comparative evaluation, (3) Operation and effect, and (4) Other embodiments will be described. It is noted that in the following description of the drawings, identical or similar portions are assigned with identical or similar references. However, it should be noted that the drawings are merely exemplary and ratios of each dimension differ from the actual ones.

Therefore, the specific dimensions, etc., should be determined in consideration of the following explanations. Moreover, it is needless to say that relations and ratios among the respective dimensions differ among the diagrams.

### (1) Configuration of run-flat tire

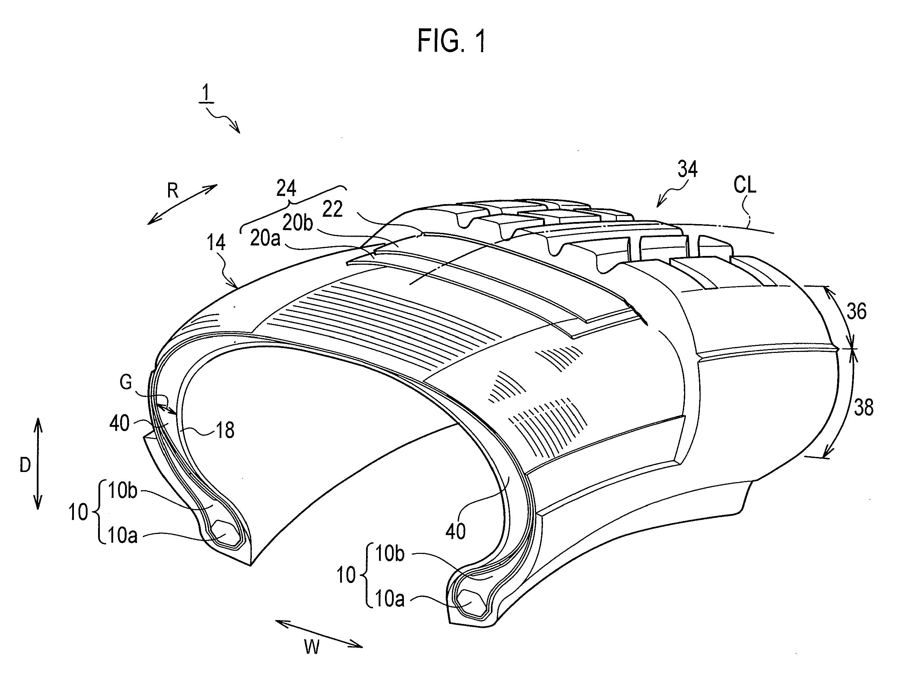

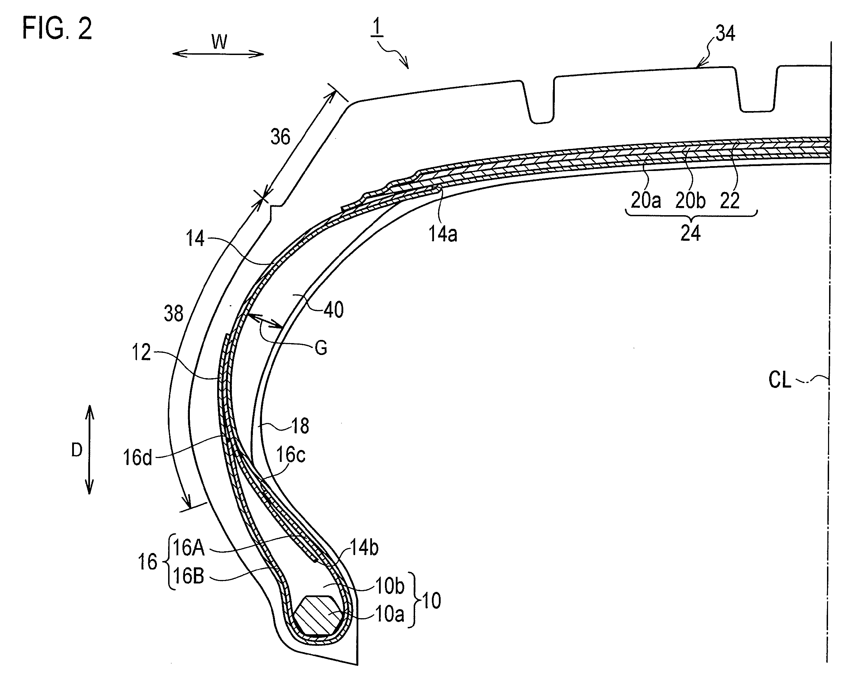

Fig. 1 is a partial exploded perspective view including the cross-section in a tread width direction of the run-flat tire 1 in the embodiment of the present invention. Fig. 2 is a cross-sectional view in the tread width direction of the run-flat tire 1. It is noted that in Fig. 1 and Fig. 2, hatching of the cross-section is partially omitted in order to clarify the position of a carcass, etc. The run-flat tire 1 illustrated in Fig. 1 and Fig. 2 is a run-flat tire that excels at the durability during high-speed driving especially when the inner pressure greatly decreases. Specifically, (1.1) Bead portion, (1.2) Carcass, (1.3) Belt layer, (1.4) Reinforcing rubber layer, (1.5) Side reinforcing layer, and (1.6) Turned-back bead reinforcing layer will be described.

### (1.1) Bead portion

The run-flat tire 1 includes a pair of bead portions 10 including at least a bead core 10a and a bead filler 10b. Specifically, a steal cord, etc., are used for the bead core 10a configuring the bead portion 10.

### (1.2) Carcass

The run-flat tire 1 includes a carcass 12 arranged from one bead portion 10 to the other bead portion 10. The carcass 12 is turned back around the bead core 10a from the inside to the outside in a tire diameter direction. The carcass 12 is made of a carcass cord and rubber, and forms the framework of the run-flat tire 1.

### (1.3) Belt layer

The run-flat tire 1 includes a belt layer 24 having two interlocked belt layers (a belt layer 20a and a belt layer 20b) and at least one additional belt layer 22.

### (1.4) Reinforcing rubber layer

The run-flat tire 1 includes a buttress portion 36 that is formed between the tread portion 34 and the sidewall portion 38 and that is communicated to the external end of the tread portion 34 in the width direction. Specifically, the run-flat tire 1 includes a pair of buttress portions 36 at both sides of a tread width direction W of the tread portion 34. The run-flat tire 1 includes a reinforcing rubber layer 40 that is arranged from the buttress portion 36 to the sidewall portion 38 and that has a crescent sectional shape along the tread width direction W and a tire diameter direction D. Inside the tire diameter direction of the carcass 12 and the reinforcing rubber layer 40, an inner liner 18, i.e., a rubber layer equivalent to a tube and having high airtightness, is arranged.

The reinforcing rubber layer 40 reinforces the sidewall portion 38. In the cross-section along the tread width direction W and the tire diameter direction D, the reinforcing rubber layer 40 increases its thickness from the buttress portion 36 to the sidewall portion 38, and increases its thickness from the bead core 10a to the sidewall portion 38. Specifically, in the cross-section along the tread width direction W and the tire diameter direction C, a thickness G of the reinforcing rubber layer 40 is 3 mm or more and 11 mm or less. The thickness G of the reinforcing rubber layer 40 indicates the length along a direction perpendicular to the carcass 12.

### (1.5) Side reinforcing layer

The run-flat tire 1 includes the side reinforcing layer 14 arranged along the reinforcing rubber layer 40. Specifically, the side reinforcing layer 14 is arranged to cover the outside of the tread width direction W of the reinforcing rubber layer 40. The side reinforcing layer 14 has a configuration obtained by winding a reinforcing cord along a tire circumferential direction R.

An outside end 14a of the side reinforcing layer 14 in the tire diameter direction is positioned inside the belt layer 24 in the tire diameter direction and covered with the belt layer 24 toward the inside in the tire diameter direction. Specifically, the end 14a is positioned inside the belt layer 20a in the tire diameter direction. An inside end 14b of the side reinforcing layer 14 in the tire diameter direction is positioned at inside in the tire diameter direction more than an inside end of the reinforcing rubber layer 40 in the tire diameter direction.

The side reinforcing layer 14 is configured by organic fiber cord having a lower tension than that of the turned-back bead reinforcing layer 16 organic fiber cord. Specifically, a fibrous material of the organic fiber cord configuring the side reinforcing layer 14 is rayon.

### (1.6) Turned-back bead reinforcing layer

The run-flat tire 1 includes the turned-back bead reinforcing layer 16 that is arranged along the bead portion 10 and turned back around the bead core 10a from inside to outside in the tread width direction W. The turned-back bead reinforcing layer 16 is arranged between the bead portion 10 and the carcass 12. The turned-back bead reinforcing layer 16 is configured by a bead reinforcing layer main portion 16A arranged inside the bead portion 10 in the tread width direction W and a turned-back portion 16B communicated to the bead reinforcing layer main portion 16A and turned back around the bead core 10a from the inside to the outside in the tread width direction W.

The inside end 14b of the side reinforcing layer 14 in the tire diameter direction overlaps the outside end 16c of the bead reinforcing layer main portion 16A in the tire diameter direction. Specifically, the outside end 16c of the bead reinforcing layer main body 16A in the tire diameter direction is positioned at inside in the tire diameter direction more than the inside end of the reinforcing rubber layer 40 in the tire diameter direction. Moreover, the outside end 16d of the turned-back portion 16B in the tire diameter direction is positioned at outside in the tire diameter direction more than the inside end of the reinforcing rubber layer 40 in the tire diameter direction and at inside in the tire diameter direction more than a position of a tire maximum width.

The turned-back bead reinforcing layer 16 is configured by organic fiber cord having a higher tension than the side reinforcing layer 14. It is noted that the organic fiber cord configuring the side reinforcing layer 14 and the organic fiber cord configuring the turned-back bead reinforcing layer 16 are made of a different fibrous material. Specifically, a fibrous material of the organic fiber cord configuring the turned-back bead reinforcing layer 16 is aramid fiber. Specifically, the turned-back bead reinforcing layer 16 is configured such that a predetermined organic fiber cord is impregnated with a rubber component.

### (2) Comparison evaluation

Subsequently, in order to further clarify the effect of the present invention, a comparative evaluation will be described in which pneumatic tires according to comparative examples and examples below were used. Specifically, (2.1) Evaluation method and (2.2) Evaluation result will be described. It is noted that the present invention is not limited to these examples in any way.

### (2.1) Evaluation method

Three types of run-flat tires were used and various evaluations such as (2.1.1) longitudinal spring rate evaluation, (2.1.2) durability distance evaluation, and (2.1.3) high-speed durability evaluation were conducted. Data items relating to the run-flat tire were measured under the following condition.

- tire size: 245/40R18
- rim size: standard rim described in ETRTO
- inner pressure condition: 0 kPa
- test vehicle type: automatic four-wheel vehicle
- load condition: maximum load described in ETRTO

### (maximum load capability)

Each run-flat tire differs in configuration of carcass, reinforcing rubber layer, side reinforcing layer, and turned-back bead reinforcing layer, and the other configurations are similar to those of the run-flat tire 1 of the present embodiment.

The run-flat tire according to a comparative example 1 does not include the side reinforcing layer and the turned-back bead reinforcing layer, but includes a carcass comprising two layers.

The run-flat tire according to a comparative example 2 does not include the turned-back bead reinforcing layer, but includes a carcass comprising one layer. The side reinforcing layer of the run-flat tire according to the comparative example 2 is arranged along the reinforcing rubber layer from the bead portion to the buttress portion.

The run-flat tire according to the example 1 is identical to the run-flat tire 1 according to the present embodiment. This means that the run-flat tire according to the example 1 greatly differs from those of the comparative example 1 and the comparative example 2 in that the thickness of the reinforcing rubber layer is thinner and the turned-back bead reinforcing layer is provided.

### (2.1.1) Longitudinal spring rate evaluation

Evaluation method: each run-flat tire is attached to a rim, an air pressure is adjusted, and thereafter, for mass equivalent to 88% the maximum load capability and mass obtained by adding plus or minus 50 kg thereof to the aforementioned mass, and then, a deflection amount at that time is measured. A gradient evaluated by applying a linear regression to deflection-load was used as stiffness (longitudinal spring rate).

It is noted that measurements results are represented by index values when the stiffness (longitudinal spring rate) of the run-flat tire according to the comparative example 1 is set to 100 as a reference. It is shown that the larger the index value, the greater the stiffness. Accordingly, it is shown that the larger the index value, the lower the tire riding comfort.

### (2.1.2) Durability distance evaluation

Evaluation method: each run-flat tire was attached to a test drum, and a durability distance was represented by index values until the run-flat tire was broken down. It is noted that the durability of the run-flat tire according to the comparative example 1 was set to 100, and in this state, the durabilities of the other run-flat tires were evaluated. The greater the numerical value, the more superior the durability.

### (2.1.3) High-speed durability evaluation

Evaluation method: each run-flat tire was attached to a test drum, the speed was gradually accelerated from 150 km/h by 10 km/h, and a time period of maintaining each speed was set to 10 minutes. In this way, the high-speed durability dram test was conducted. A speed at which the tire was broken down during this test was measured.

### (2.2) Evaluation results

The evaluation results of each run-flat tire will be described with reference to Table 1.

**[Table 1]**

| | Comparative ex. 1 | Comparative ex. 2 | Example 1 |
|---|---|---|---|
| Carcass structure | 2 layers | 1 layer | 1 layer |
| Side reinforcing layer | Not provided | Provided | Provided |
| Turned-back bead reinforcing layer | Not provided | Not provided | Provided |
| Thickness of reinforcing rubber layer (before vulcanization) (mm) | 8.0 | 9.5 | 5.5 |
| Tire weight (kg) | 13.3 | 13.3 | 12.8 |
| Longitudinal spring rate | 100 | 100 | 93 |
| Durability distance | 100 | 100 | 100 |
| High-speed durability (km/h) | 290 | 290 | 310 |

The run-flat tire according to the example 1 was imparted with the durability equal to those of the comparative example 1 and the comparative example 2, and showed a lower value in the longitudinal spring rate evaluation. Accordingly, the run-flat tire according to the example 1 was able to further improve the riding comfort without decreasing the durability obtained during high-speed vehicle driving.

### (3) Operation and effect

As described above, according to the run-flat tire 1 based on the present invention, the side reinforcing layer 14 arranged along the reinforcing rubber layer 40 is provided. Thus, when the inner pressure of the run-flat tire 1 greatly decreases such as when a puncture of tire, it is possible to increase the stiffness of the sidewall portion 38, prevent the deflection of the sidewall portion 38, and secure the durability. According to the run-flat tire 1, unlike the conventional run-flat tire, it is not necessary to increase the thickness of the reinforcing rubber layer 40, and therefore it is possible to improve the durability without increasing the tire weight.

Moreover, the run-flat tire 1 includes the turned-back bead reinforcing layer 16 which is configured by the bead reinforcing layer main portion 16A and the turned-back portion 16B. The run-flat tire 1 is arranged along the bead portion 10 and turned back around the bead core 10a from the inside to the outside in the tread width direction W. Thus, when the inner pressure of the run-flat tire 1 greatly decreases, it is possible to reinforce the bead portion 10 that tends to deform along the tread width direction W.

That is, according to the run-flat tire 1, when the inner pressure of the run-flat tire 1 greatly decreases, it is possible to reinforce the necessary location only by the side reinforcing layer 14 and the turned-back bead reinforcing layer 16, and at the same time, the stiffness along the tire diameter direction D affecting the longitudinal spring component is not excessively increased. Thus, it is possible to effectively prevent the deformation along the tread width direction W.

Therefore, according to the run-flat tire 1, it is possible to further improve the riding comfort without decreasing the durability during high-speed vehicle driving.

As compared to the conventional run-flat tire, the run-flat tire 1 can make the tire weight lighter and can alleviate the load of the tread portion 34 during high-speed driving. Accordingly, it is possible to further improve the durability of the run-flat tire 1.

In the present embodiment, the outside end 14a of the side reinforcing layer 14 in the tire diameter direction is positioned inside the belt layer 20a in the tire diameter direction and covered with the belt layer 20a. Further, the inside end 14b of the side reinforcing layer 14 in the tire diameter direction overlaps the outside end 16c of the bead reinforcing layer main portion 16A in the tire diameter direction. Thus, the side reinforcing layer 14 can sufficiently cover the outside of the tread width direction W of the reinforcing rubber layer 40, further prevent the deflection of the sidewall portion 38, and sufficiently secure the durability.

In the present embodiment, the side reinforcing layer 14 and the turned-back bead reinforcing layer 16 are each configured by an organic fiber cord, and thus, it is possible to improve the durability without increasing the tire weight. Moreover, the organic fiber cord configuring the side reinforcing layer 14 and the organic fiber cord configuring the turned-back bead reinforcing layer 16 are made of a different fibrous material, and therefore, it is possible to comply with various situation changes such as the inner pressure of the run-flat tire 1 and a change in rolling speed.

In the present embodiment, the turned-back bead reinforcing layer 16 is configured by an organic fiber cord having a higher tension than that of the side reinforcing layer 14, and thus, it is possible to further improve the durability of the run-flat tire 1. On the other hand, the side reinforcing layer 14 is configured by an organic fiber cord having a lower tension than that of the turned-back bead reinforcing layer 16, and thus, it is possible to further improve the riding comfort without excessively increasing the longitudinal spring.

In the present embodiment, the fibrous material of the organic fiber cord configuring the side reinforcing layer 14 is rayon, and thus, it is possible to reinforce the sidewall portion 38 without increasing the tire weight. Moreover, the fibrous material of the organic fiber cord configuring the turned-back bead reinforcing layer 16 is aramid, and thus, it is possible to sufficiently reinforce the bead portion 10 that requires stiffness.

In the present embodiment, the thickness G of the reinforcing rubber layer 40 in the bead portion 10 is 3 mm or more and 11 mm or less. Thus, as compared to the conventional run-flat tire in which the reinforcing rubber layer is thickened, the run-flat tire 1 can sufficiently make the tire weight lighter.

### (4) Other embodiments

So far, the present invention is disclosed through the above embodiment. However, it should not be interpreted that the statements and drawings constituting a part of the present disclosure limit the present invention. From this disclosure, a variety of alternate embodiments, examples, and applicable techniques will be apparent to one skilled in the art.

For example, the embodiment of the present invention can be modified as follows.

In the aforementioned embodiment, the outside end 14a of the side reinforcing layer 14 in the tire diameter direction is positioned inside the belt layer 20a in the tire diameter direction and covered with the belt layer 20a. Further, the inside end 14b of the side reinforcing layer 14 in the tire diameter direction overlaps the outside end 16c of the bead reinforcing layer main portion 16A in the tire diameter direction. However, the present invention is not limited thereto, and the side reinforcing layer 14 may be arranged to cover one portion of the reinforcing rubber layer 40 according to the shape and the characteristic of the reinforcing rubber layer 40. Further, it may be possible that the inside end 14b of the side reinforcing layer 14 in the tire diameter direction does not overlap the outside end 16c of the bead reinforcing layer main portion 16A in the tire diameter direction.

In the aforementioned embodiment, the fibrous material of the organic fiber cord configuring the side reinforcing layer 14 is rayon and the fibrous material of the organic fiber cord configuring the turned-back bead reinforcing layer 16 is aramid; however, the present invention is not limited thereto, and an organic fiber cord having a high elasticity may be made of aramid fiber and an organic fiber cord having a low elasticity may be made of polyamide-based synthetic fiber, etc., according to a requirement.

Thus, needless to say, the present invention includes various embodiments not described herein. Therefore, the technical range of the present invention is to be defined only by the inventive specific description above, but according to the invention as claimed with reference to the description in accordance with the Protocol to Article 69 EPC.

[CANCELLED]

### Industrial Applicability

Thus, the run-flat tire according to the present invention further improves the riding comfort without decreasing the durability during high-speed vehicle driving, and thus, the present invention is useful for a technology for designing or for manufacturing a tire.

D...tire diameter direction, R...tire circumferential direction, 1 ...run-flat tire, 10...bead portion, 10a...bead core, 10b...bead filler, 12 ...carcass, 14...side reinforcing layer, 14a, 14b ...end, 16...bead reinforcing layer, 16A...bead reinforcing layer main portion, 16B... turned-back portion, 16c...end, 18...inner liner, 20a, 20b...belt layer, 22 ...additional belt layer, 24...combined belt layer, 34...tread portion, 36 ...buttress portion, 38...sidewall, 40...reinforcing rubber layer

## Claims

1. A run-flat tire (1), comprising:
a pair of bead portions (10) including at least a bead core (10a);
a carcass (12) arranged from the one bead portion to the other bead portion; and
a reinforcing rubber layer (40) arranged from a buttress portion (36) including an outside end of a tread portion in a width direction and a sidewall portion (38) communicating to the buttress portion and has a crescent sectional shape along a tread width direction and a tire diameter direction, the run-flat tire further comprising:
a side reinforcing layer (14) arranged along the reinforcing rubber layer; and
a turned-back bead reinforcing layer (16) arranged along the bead portion and turned back around the bead core from inside to outside in the tread width direction, wherein
the turned-back bead reinforcing layer comprises:
a bead reinforcing layer main portion (16A) arranged inside the bead portion in the tread width direction (W), and
a turned-back portion (16B) communicated to the bead reinforcing layer main portion and turned back around the bead core from the inside to the outside in the tread width direction, **characterized in that**:
the side reinforcing layer is configured by a side reinforcing layer organic fiber cord, and **in that**
the turned-back bead reinforcing layer is configured by a turned-back bead reinforcing layer organic fiber cord having a higher tension than that of the side reinforcing layer organic fiber cord.

2. The run-flat tire according to claim 1, wherein
a fibrous material of the organic fiber cord configuring the side reinforcing layer is rayon, and
a fibrous material of the organic fiber cord configuring the turned-back bead reinforcing layer is aramid.

## Patentansprüche

1. Notlaufreifen (1), der Folgendes umfasst:
ein Paar von Wulstabschnitten (10), die wenigstens einen Wulstkern (10a) einschließen,
eine Karkasse (12), die von dem einen Wulstabschnitt zu dem anderen Wulstabschnitt angeordnet ist, und
eine Verstärkungsgummilage (40), die von einem Pfeilerabschnitt (36), der ein äußeres Ende eines Laufflächenabschnitts in einer Breitenrichtung einschließt, und einem Seitenwandabschnitt (38), der mit dem Pfeilerabschnitt in Verbindung steht und eine halbmondförmige Schnittgestalt entlang einer Laufflächen-Breitenrichtung und einer Reifen-Durchmesserrichtung hat, angeordnet ist, wobei der Notlaufreifen ferner Folgendes umfasst:
eine seitliche Verstärkungslage (14), die entlang der Verstärkungsgummilage angeordnet ist, und
eine umgeschlagene Wulstverstärkungslage (16), die entlang des Wulstabschnitts angeordnet und um den Wulstkern von innen nach außen in der Laufflächen-Breitenrichtung umgeschlagen ist, wobei
die umgeschlagene Wulstverstärkungslage Folgendes umfasst:
einen umgeschlagenen Wulstverstärkungslagen-Hauptabschnitt (16A), der innerhalb des Wulstabschnitts in der Laufflächen-Breitenrichtung (W) angeordnet ist, und
einen umgeschlagenen Abschnitt (16B), der mit dem Wulstverstärkungslagen-Hauptabschnitt verbunden und um den Wulstkern von der Innenseite zur Außenseite in der Laufflächen-Breitenrichtung umgeschlagen ist,
**dadurch gekennzeichnet, dass**:
die seitliche Verstärkungslage durch einen organischen Fasercord der seitlichen Verstärkungslage konfiguriert wird, und dadurch, dass
die umgeschlagene Wulstverstärkungslage durch einen organischen Fasercord der umgeschlagenen Wulstverstärkungslage konfiguriert wird, der eine Spannung hat, die höher ist als diejenige des organischen Fasercords der seitlichen Verstärkungslage.

2. Notlaufreifen nach Anspruch 1, wobei
ein faseriges Material des organischen Fasercords, der die seitliche Verstärkungslage konfiguriert, Rayon ist und
ein faseriges Material des organischen Fasercords, der die umgeschlagene Wulstverstärkungslage konfiguriert, Aramid ist.

## Revendications

1. Bandage pneumatique à roulage à plat (1), comprenant :
une paire de parties de talon (10) englobant au moins une tringle (10a) ;
une carcasse (12) agencée de l'une des parties de talon vers l'autre partie de talon ; et
un couche de gomme de renforcement (40) s'étendant à partir d'une partie de contrefort (36) englobant une extrémité externe d'une partie de bande de roulement dans une direction de la largeur, et d'une partie de flanc (38) communiquant avec la partie de contrefort et ayant une forme de section en croissant le long d'une direction de la largeur de la bande de roulement et d'une direction diamétrale du bandage pneumatique, le bandage pneumatique à roulage à plat comprenant en outre :
une couche de renforcement latérale (14) agencée le long de la couche de gomme de renforcement ; et
une couche de renforcement du talon retournée (16) agencée le long de la partie de talon et retournée autour de la tringle, de l'intérieur vers l'extérieur dans la direction de la largeur de la bande de roulement ; dans lequel :
la couche de renforcement retournée du talon comprend :
une partie principale retournée de la couche de renforcement du talon (16A) agencée à l'intérieur de la partie de talon dans la direction de la largeur de la bande de roulement (W) ; et
une partie retournée (16B) communiquant avec la partie principale de la couche de renforcement du talon et retournée autour de la tringle, de l'intérieur vers l'extérieur dans la direction de la largeur de la bande de roulement ;
**caractérisé en ce que** :
la couche de renforcement latérale est configurée par un câblé de fibres organiques ; et **en ce que** :
la couche de renforcement retournée du talon est configurée par un câblé de fibres organiques de la couche de renforcement retournée du talon présentant une tension supérieure à celle du câblé de fibres organiques de la couche de renforcement latérale.

2. Bandage pneumatique à roulage à plat selon la revendication 1, dans lequel :
un matériau fibreux du câblé de fibres organiques configurant la couche de renforcement latérale est constitué par de la rayonne ; et
un matériau fibreux du câblé de fibres organiques configurant la couche de renforcement retournée du talon est constitué par de l'aramide.
